# EUROPEAN PATENT APPLICATION

(11) **EP 2 299 723 A1**
(43) Date of publication of application: **23.03.2011**
(21) Application number: 10159794.6
(22) Date of filing: 13.04.2010
(51) Int. Cl.: H04N 9/73

(54) **Video display apparatus and video display method**

(30) Priority: 14.09.2009 JP 2009211313
(71) Applicant: Kabushiki Kaisha Toshiba, Tokyo 105-8001 (JP)
(72) Inventor: Nagai, Kenichi, Minato-ku, Tokyo 105-8001 (JP)
(74) Representative: Henkel, Feiler & Hänzel

(57) **Abstract**

A video display apparatus includes: a sensor configured to detect a color temperature of an ambient light of the video display apparatus; a determining module configured to determine that a current time is in one of a first time slot which is from a sunrise time to a sunset time and a second time slot which is from the sunset time to the sunrise time based on sunrise/sunsct time information to obtain time slot information of the current time; and an image quality controller configured to control image quality of a video signal based on the color temperature and the time slot information.

## Description

### CROSS REFERENCE TO RELATED APPLICATION(S)

The present disclosure relates to the subject matters contained in Japanese Patent Application No. 2009-211313 filed on September 14, 2009, which are incorporated herein by reference in its entirety.

### FIELD

The present invention relates to a video display apparatus and a video display method.

### BACKGROUND

JP-A-2009-31554 discloses a related-art video display apparatus in which a color temperature of a displayed video is corrected according to brightness of a screen of a display unit that is determined according to illuminance of an ambient light of the video display apparatus.

The video display apparatus disclosed in JP-A-2009-31554 is provided with an illuminance sensor for measuring the illuminance of the ambient light of the video display apparatus and outputting a signal corresponding to the measured illuminance, a luminance determining module for determining luminance of the display unit based on the illuminance measured by the illuminance sensor, a color temperature correcting module for correcting, based on the luminance determined by the luminance determining module, the color temperature by correcting gradation curves to be used for adjustment of RGB gradations of a video signal, and the display unit for displaying the video signal as corrected by the luminance determining module and the color temperature correcting module. With this configuration, video can be displayed that has been corrected so as to be suitable for the illuminance of the ambient light and, as a result, the user would feel natural by setting the luminance and the color temperature of video to be high when the illuminance of the ambient light is high and setting the luminance and the color temperature of video to be low when the illuminance is low.

However, although the related-art video display apparatus corrects the luminance and the color temperature of video according to the illuminance of the ambient light, it cannot accommodate a case that the color temperature of the ambient light varies being affected by external light coming through a window of a room where the video display apparatus is installed, a color scheme of wallpaper or curtains, or some other factor. Therefore, the related-art video display apparatus may not be able to display a video that the user would feel natural because of a difference between a color temperature of the video as an adjustment result of the video display apparatus and a color temperature of the ambient light that the user senses.

### SUMMARY

One of objects of the present invention is to provide a video display apparatus and a video display method which displays video that is corrected so as to be suitable for illuminance and a color temperature of an ambient light of the video display apparatus, and that a user who is viewing the video would feel natural.

According to an aspect of the present invention, there is provided a video display apparatus including: a sensor configured to detect a color temperature of an ambient light of the video display apparatus; a determining module configured to determine that a current time is in one of a first time slot which is from a sunrise time to a sunset time and a second time slot which is from the sunset time to the sunrise time based on sunrise/sunset time information to obtain time slot information of the current time; and an image quality controller configured to control image quality of a video signal based on the color temperature and the time slot information.

According to another aspect of the present invention, there is provided a video display method including: detecting a color temperature of an ambient light of the video display apparatus; determining whether a current time is in one of a first time slot from a sunrise time to a sunset time and a second time slot from the sunset time to the sunrise time based on sunrise/sunset time information to obtain time slot information of the current time; and controlling image quality of a video signal based on the color temperature and the time slot information.

### BRIEF DESCRIPTION OF THE DRAWINGS

A general configuration that implements the various features of the invention will be described with reference to the drawings. The drawings and the associated descriptions are provided to illustrate embodiments of the invention and not to limit the scope of the invention.
Fig. 1 is a schematic view showing an appearance of a video display apparatus according to an embodiment of the present invention.
Fig. 2 is a block diagram showing an exemplary configuration of the video display apparatus.
Fig. 3 is a block diagram showing an exemplary configuration of a control system of the video display apparatus.
Fig. 4 is a graph showing an exemplary operation of a luminance determining module of the video display apparatus.
Fig. 5 is a graph showing an exemplary operation of a color temperature determining module of the video display apparatus.
Fig. 6 is a graph showing an exemplary operation of a density determining module of the video display apparatus.
Fig. 7 is a flowchart showing an exemplary process which is executed by a day/night determining module of the video display apparatus.

### DETAILED DESCRIPTION OF THE EMBODIMENTS

### (Configuration of video display apparatus)

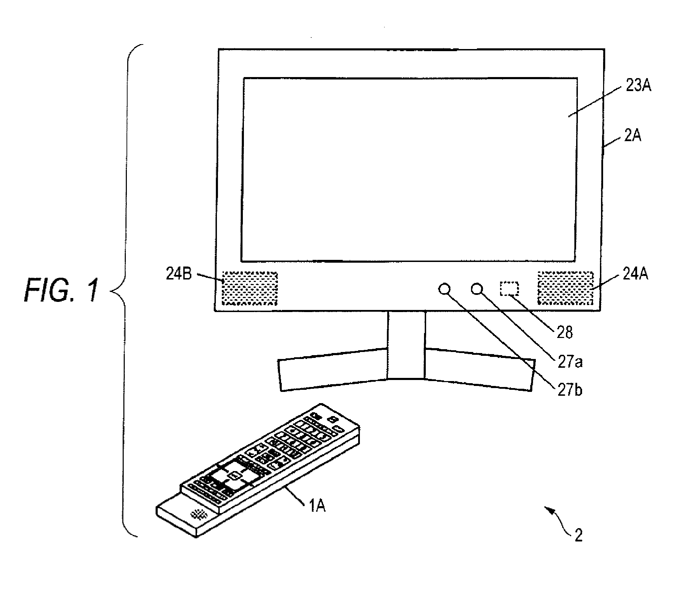

Fig. 1 is a schematic view showing an appearance of a video display apparatus according to an embodiment of the present invention.

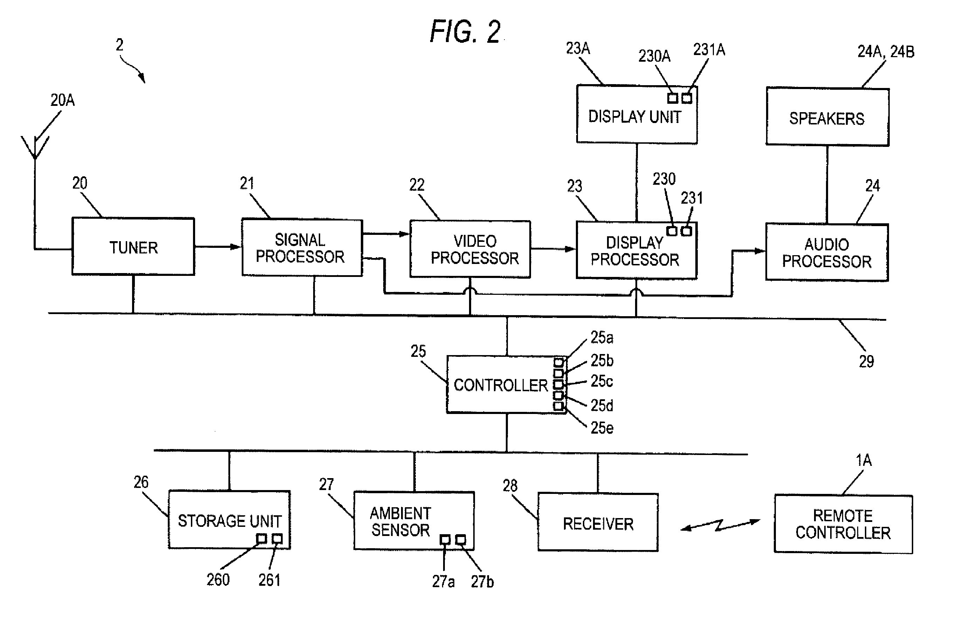

The video display apparatus 2 is a TV receiver which displays video by receiving digital broadcast waves or the like from the outside via an antenna 20A (see Fig. 2) or by receiving a video signal from an external video reproducing apparatus (not shown) such as a hard disk drive (HDD) recorder or a digital versatile disc (DVD) player. The video display apparatus 2 is equipped with a display unit 23A which is provided with a liquid crystal display (LCD) panel 231A (see Fig. 2) etc. and displays video on a front surface of the LCD panel, speakers 24A and 24B which output audio, an illuminance sensor 27a such as a photodiode which measures illuminance of an ambient light of the video display apparatus 2 and outputs a signal corresponding to the measured illuminance, a color temperature sensor 27b such as an RGB color sensor which measures a color temperature of the ambient of the video display apparatus 2 and outputs a signal corresponding to the measured color temperature, and a receiver 28 for receiving an operation signal such as a radio frequency (RF) signal or an infrared signal transmitted from a remote controller 1A having a plurality of operation switches.

The video display apparatus 2 also has, on its back side, antenna terminals, external input terminals, an operation unit consisting of a plurality of switches, etc. (not shown). Furthermore, the video display apparatus 2 has, inside a main body 2A, electronic components such as a central processing unit (CPU) for processing a video signal and an audio signal and controlling respective modules and units, a random access memory (RAM), a read-only memory (ROM), and an HDD.

The remote controller 1A has, on a front surface of a body of the remote controller 1A, a plurality of operation switches etc. and also has, inside the body, a conversion module for converting an operation on a switch into an operation signal and a transmitting module for sending the operation signal to the video display apparatus 2 in the form of an RF signal, for example.

Fig. 2 is a block diagram showing an exemplary configuration of the video display apparatus 2.

The video display apparatus 2 is provided with a tuner 20, a signal processor 21, a video processor 22, a display processor 23, an audio processor 24, a controller 25, a storage unit 26, an ambient sensor 27 and the receiver 28, which are connected to each other via a bus 29.

The tuner 20 selects a signal on a desired channel from broadcast signals transmitted from digital broadcasting stations and received by the antenna 20A, and outputs the desired broadcast signal to the signal processor 21.

The signal processor 21 is connected to the video processor 22 and the audio processor 24. The signal processor 21 separates the broadcast signal received from the tuner 20 into a video signal and an audio signal and outputs the video signal and the audio signal to the video processor 22 and the audio processor 24, respectively.

The video processor 22 is connected to the display unit 23A via the display processor 23.

The display processor 23 performs an image quality adjustment on the received video signal and outputs a resulting video signal to the display unit 23A. The display processor 23 is provided with a backlight processor 230, a color temperature processor 231, etc. (not shown) for performing display adjustments for the display unit 23A. The display unit 23A is provided with a backlight 230A whose luminance is varied by being controlled by an inverter or the like and the LCD panel 231A for displaying video by being illuminated with the backlight 230A. The backlight processor 230 adjusts brightness of the LCD panel 231A by varying the luminance of the backlight 230A. The color temperature processor 231 adjusts a color temperature of the LCD panel 231A by varying RGB values.

The audio processor 24 is connected to the speakers 24A and 24B and adjusts sound quality of the received audio signal.

The video display apparatus 2 is provided with a video analog/digital converter (A/D converter) and an audio A/D converter for receiving a video signal and an audio signal output from a video playback apparatus that is connected to an external input terminal(not shown). A video signal and an audio signal (analog signals) that are input to the video A/D converter and the audio A/D converter are converted into digital signals (output signals), respectively, which are output to the video processor 22 and the audio processor 24, respectively.

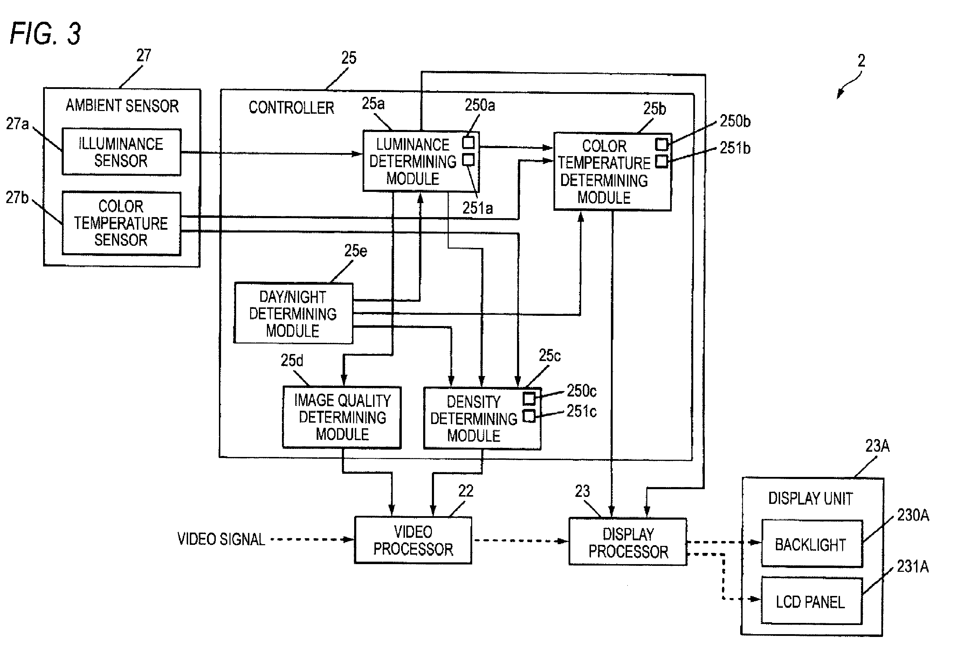

The controller has a CPU, and controls the respective units of the video display apparatus 2 via control lines (drawn as solid lines (not arrows) in Fig. 2) such as the bus 29. The controller 25 operates as a luminance determining module 25a, a color temperature determining module 25b, a density (light and shade) determining module 25c, an image quality determining module 25d, a day/night determining module 25e, etc., which will be described later in detail with reference to Fig. 3.

The storage unit 26 stores region information 260 which is information indicating a region where the video display apparatus 2 is placed, sunrise/sunset information 261 which is information of sunrise times and sunset times that are correlated with pieces of region information and dates, video information of programs recorded by the video display apparatus 2, programs for causing the controller 25 to operate as the luminance determining module 25a, the color temperature determining module 25b, the density determining module 25c, the image quality determining module 25d, and the day/night determining module 25e, and other information. The region information 260 is set by the user when, for example, the video display apparatus 2 is used for the first time (including a case that the region where the video display apparatus 2 is placed is changed because of a move of the user, for example).

The ambient sensor 27 consists of a plurality of sensors including the illuminance sensor 27a and the color temperature sensor 271 which are shown in Fig. 1, and outputs, to the controller 25, signals corresponding to values measured by the illuminance sensor 27a and the color temperature sensor 27b. Alternatively, only an RGB sensor may be used as the ambient sensor 27, in which case illuminance values of light components in red, green, and blue wavelength ranges are measured, and the illuminance and the color temperature of the ambient light of the video display apparatus 2 are calculated from the measured illuminance values of the three color components. In this case, the RGB sensor has the functions of both of the illuminance sensor 27a and the color temperature sensor 27b.

The receiver 28 receives of an operation signal from the remote controller 1A in the form of an RF signal, for example, and outputs the operation signal to the controller 25.

Fig. 3 is a block diagram showing an exemplary configuration of the control system of the video display apparatus 2.

As described above, the controller 25 operates as the luminance determining module 25a, the color temperature determining module 25b, the density determining module 25c, the image quality determining module 25d, and the day/night determining module 25e.

The luminance determining module 25a determines luminance of the backlight 230A based on illuminance that is input from the illuminance sensor 27a and a day parameter 250a or a night parameter 251a that is employed according to a day/night determination result which is input from the day/night determining module 25e (described later). The backlight 230A is controlled via the backlight processor 230 of the display processor 23.

The color temperature determining module 25b changes the color temperature of the LCD panel 231A based on the luminance of the backlight 230A that is input from the luminance determining module 25a, a color temperature that is input from the color temperature sensor 27b, and one of a day parameter 250b and a night parameter 251b that is employed according to a day/night determination result that is input from the day/night determining module 25e. The LCD panel 231A is controlled via the color temperature processor 231 of the display processor 23.

The density determining module 25c determines a density (light and shade) of a color signal of a video signal based on the luminance of the backlight 230A that is input from the luminance determining module 25a, the color temperature that is input from the color temperature sensor 27b, and one of a day parameter 250c and a night parameter 251c that is employed according to the day/night determination result that is input from the day/night determining module 25e. The density of the color signal of the video signal is changed by the video processor 22.

The image quality determining module 25d determines a γ-value and sharpness of the video signal based on the luminance of the backlight 230A that is input from the luminance determining module 25a. The γ-value and the sharpness of the video signal are changed by the video processor 22.

The day/night determining module 25e refers to the region information 260 and the sunrise/sunset information 261 which are stored in the storage unit 26, recognizes a current time based on time information that is included in digital broadcast waves received by the tuner 20, and determines whether the current time is in a time slot which is from a sunrise time to a sunset time (hereinafter referred to as a first time slot) or in a time slot which is from the sunset time to the sunrise time (hereinafter referred to as a second time slot). If the current time is in the first time slot, the day/night determining module 25e outputs a signal indicating that the current time is in the first time slot. If the current time is in the second time slot, the day/night determining module 25e outputs a signal indicating that the current time is in the second time slot.

### (Operation of video display apparatus)

An exemplary operation of the video display apparatus 2 according to the embodiment of the invention will be described below with reference to the drawings.

### (1) Basic operation of video display apparatus

First, the user presses a power switch of the remote controller 1A to power-on the video display apparatus 2. When the power switch is pressed, a control module of the remote controller 1A generates an operation signal for powering-on the video display apparatus 2 and sends the operation signal to the video display apparatus 2 in the form of an RF signal.

Receiving the RF signal, the receiver 28 of the video display apparatus 2 outputs a corresponding operation signal to the controller 25, which requests, based on the received operation signal, a power unit (not shown) to power-on the video display apparatus 2.

The video display apparatus 2 starts to operate in response to the power-on request. The tuner 20 receives broadcast signals transmitted from the digital broadcasting stations via the antenna 20A, selects a signal on a desired channel from the received broadcast signals, and outputs the selected signal to the signal processor 21.

The signal processor 21 separates the broadcast signal received from the tuner 20 into a video signal and an audio signal, and outputs the video signal and the audio signal to the video processor 22 and the audio processor 24, respectively.

The video processor 22 processes the video signal received from the signal processor 21 under control of the image quality determining module 25d and the density determining module 25c of the controller 25.

The display processor 23 processes the video signal as processed by the video processor 22 under control of the luminance determining module 25a and the color temperature determining module 25b of the controller 25, and displays a resulting video signal on the display unit 23A.

The audio processor 24 performs a sound quality adjustment on the audio signal that is input from the signal processor 21, and causes the speakers 24A and 24B to output a sound.

### (2) Operations of controller 25 for controlling video processor 22 and display processor 23

Operations of the controller 25 for controlling the video processor 22 and the display processor 23, that is, operations of the day/night determining module 25e, the luminance determining module 25a, the color temperature determining module 25b, and the density determining module 25c, will be described below.

### (2-1) Operation of day/night determining module 25e

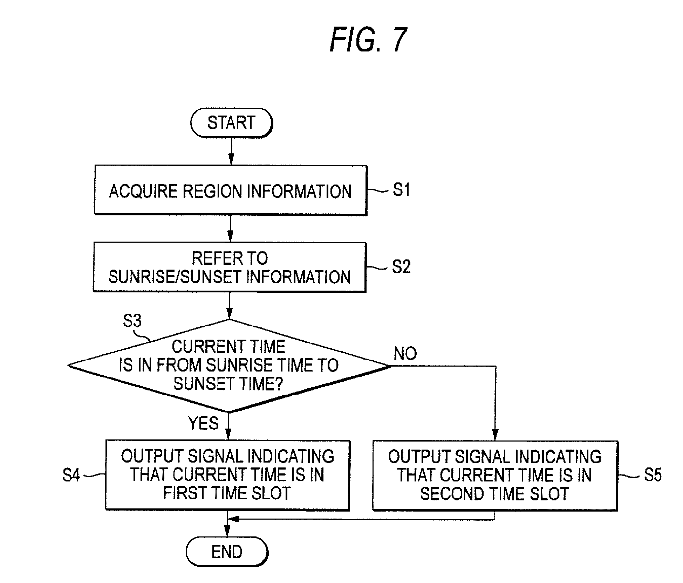

Fig. 7 is a flowchart of an exemplary process which is executed by the day/night determining module 25e of the video display apparatus 2.

First, in step S1, the day/night determining module 25e obtains the region information 260 from the storage unit 26 for determining a region where the video display apparatus 2 is placed. In step S2, the day/night determining module 25e refers to pieces of information, corresponding to the region information 260, of the sunrise/sunset information 261 stored in the storage unit 26 for determining today's sunrise time and a sunset time.

In step S3, the day/night determining module 25e determines whether the current time is in the first time slot which is from the sunrise time to the sunset time.

If the current time is from the sunrise time to the sunset time (YES in step S3), in step S4, the day/night determining module 25e outputs a signal indicating that the current time is in the first time slot to the luminance determining module 25a, the color temperature determining module 25b, and the density determining module 25c. If the current time is from the sunset time to the sunrise time (No in step S3), in step S5, the day/night determining module 25e outputs a signal indicating that the current time is in the second time slot to the luminance determining module 25a, the color temperature determining module 25b, and the density determining module 25c.

### (2-2) Operation of luminance determining module 25a

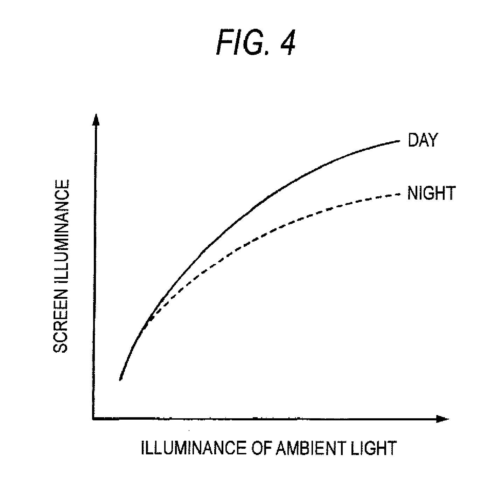

Fig. 4 is a graph showing an exemplary operation of the luminance determining module 25a of the video display apparatus 2.

The luminance determining module 25a varies screen luminance of a video to be displayed on the display unit 23A according to the luminance of the ambient light that is measured by the illuminance sensor 27a. More specifically, the luminance determining module 25a varies the screen luminance in the manner represented by a solid line in Fig. 4 by using the day parameter 250a if the determination result of the day/night determining module 25e is that the current time is in the first time slot, and varies the screen luminance in the manner represented by a broken line in Fig. 4 by using the night parameter 251a if the determination result of the day/night determining module 25e is that the current time is in the second time slot.

### (2-3) Operation of color temperature determining module 25b

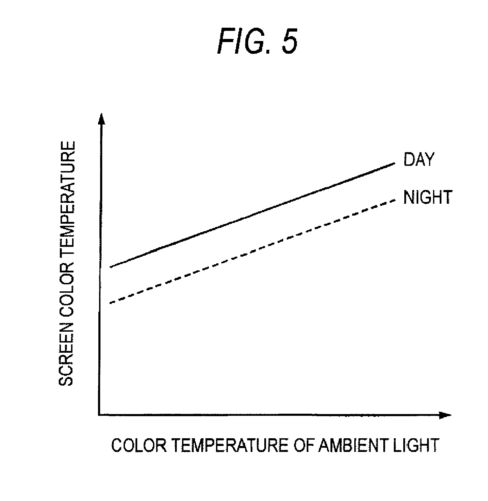

Fig. 5 is a graph showing an exemplary operation of the color temperature determining module 25b of the video display apparatus 2.

The color temperature determining module 25b varies a color temperature of a video signal according to the color temperature of the ambient light that is measured by the color temperature sensor 27b. More specifically, the color temperature determining module 25b varies the color temperature in the manner represented by a solid line in Fig. 5 by using the day parameter 250b if the determination result of the day/night determining module 25e is that the current time is in the first time slot, and varies the color temperature in the manner represented by a broken line in Fig. 5 by using the night parameter 251b if the determination result of the day/night determining module 25e is that the current time is in the second time slot. The color temperature determining module 25b varies the color temperature of the video signal also according to screen luminance that is determined by the luminance determining module 25a. The lines shown in Fig. 5 are ones of a case that the screen luminance is fixed at an arbitrary value.

### (2-4) Operation of density determining module 25c.

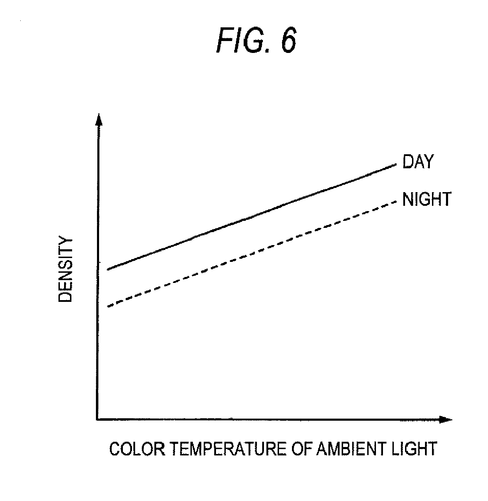

Fig. 6 is a graph showing an exemplary operation of the density determining module 25c of the video display apparatus 2.

The density determining module 25c varies density of a color signal of a video signal according to the color temperature of the ambient light that is measured by the color temperature sensor 27b. More specifically, the density determining module 25c varies the density in the manner represented by a solid line in Fig. 6 by using the day parameter 250c if the determination result of the day/night determining module 25e is that the current time is in the first time slot, and varies the density in the manner represented by a broken line in Fig. 6 by using the night parameter 251e if the determination result of the day/night determining module 25e is that the current time is in the second time slot. The density determining module 25c varies the density of the color signal of the video signal also according to the screen luminance that is determined by the luminance determining module 25a. The lines shown in Fig. 6 are ones of a case that the screen luminance is fixed at an arbitrary value.

The image quality determining module 25d determines a γ-value and sharpness of a video signal according to luminance of the backlight 230A that is input from the luminance determining module 25a, and outputs the γ-value and sharpness to the video processor 22.

### (Advantages of embodiment)

In the above-described embodiment, video processing and display processing are performed according to the color temperature of the ambient light that is measured by the color temperature sensor 27b in such a manner that a color temperature change due to presence/absence of incidence of external light or some other factor that is determined by the day/night determining module 25e is taken into consideration. Therefore, it is possible to display a video in such a manner that that the user (viewer) would feel the video natural according to the illuminance and the color temperature of the ambient light of the video display apparatus 2.

### [Other embodiments]

The invention is not limited to the above embodiment, and various modifications are possible without departing from the spirit and scope of the invention. For example, the day/night determining module 25e may determine not only whether the current time is in the first time slot or the second time slot but also determine, if it is in the first time slot, whether it is in the morning, around the noon, or in the evening. In this case, each of the luminance determining module 25a, the color temperature determining module 25b, and the density determining module 25c is configured so as to have parameters corresponding to those time slots.

A video/display adjustment mode may be provided in which all or part of the illuminance sensor 27a, the color temperature sensor 27b, and the day/night determining module 25e do not function. This configuration is effective in, for example, the case where the video display apparatus 2 is placed in a room where there is no difference between a daytime color temperature and a nighttime color temperature, such as a room having no window.

The processing method of each of the luminance determining module 25a, the color temperature determining module 25b, the density determining module 25e, and the image quality determining module 25d may be modified according to information other than the (pieces of) information used in the embodiment. For example, the processing method may be modified depending on whether or not the video signal source is a movie or the like (e.g., a source that requires 2-3 pull-down conversion).

Although the embodiment according to the present invention has been described above, the present invention is not limited to the above-mentioned embodiment but can be variously modified.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A video display apparatus comprising:
a sensor configured to detect a color temperature of an ambient light the video display apparatus;
a determining module configured to determine that a current time is in one of a first time slot which is from a sunrise time to a sunset time and a second time slot which is from the sunset time to the sunrise time based on sunrise/sunset time information to obtain time slot information of the current time; and
an image quality controller configured to control image quality of a video signal based on the color temperature and the time slot information.

2. The apparatus of claim 1, wherein the image quality controller is configured to control at least one of luminance, color temperature, and density of the video signal.

3. The apparatus according of claim 1 or 2, wherein the determining module is configured to obtain the time slot information based on sunrise/sunset time information of a preset region.

4. The apparatus of any one of claims 1 to 3, wherein the first time slot and the second time slot are separated into a plurality of subordinate time slots, respectively, and the determining module is configured to determine whether the current time is in one of the plurality of subordinate time slots.

5. The apparatus of claim 1, wherein the sensor is configured to detect three-color illuminance values of red, green, and blue light and to calculate the color temperature and illuminance of the ambient light based on the detected three-color illuminance values.

6. A video display method comprising:
detecting a color temperature of an ambient light the video display apparatus;
determining whether a current time is in one of a first time slot from a sunrise time to a sunset time and a second time slot from the sunset time to the sunrise time based on sunrise/sunset time information to obtain time slot information of the current time; and
controlling image quality of a video signal based on the color temperature and the time slot information.

## Amended claims

### Amended claims in accordance with Rule 137(2) EPC.

**1.** A video display apparatus comprising:
a sensor (27) configured to detect a color temperature of an ambient light of the video display apparatus;
a determining module (25e) configured to determine that a current time is in one of a first time slot which is from a sunrise time to a sunset time and a second time slot which is from the sunset time to the sunrise time based on sunrise/sunset time information to obtain time slot information of the current time; and
a controller (25) configured to control video processing of a video signal based on the color temperature and the time slot information.

**2.** The apparatus of claim 1. wherein the controller (25) is configured to control at least one of luminance, color temperature, and density of a color signal of the video signal.

**3.** The apparatus according of claim 1 or 2, wherein the determining module (25e) is configured to obtain the time slot information based on sunrise/sunset time information of a preset region.

**4.** The apparatus of any one of claims 1 to 3, wherein the first time slot and the second time slot are separated into a plurality of subordinate time slots, respectively, and the determining module (25e) is configured to determine whether the current time is in one of the plurality of subordinate time slots.

**5.** The apparatus of claim 1, wherein the sensor (27) is configured to detect three-color illuminance values of red, green, and blue light and to calculate the color temperature and illuminance of the ambient light based on the detected three-color illuminance values.

**6.** A video display method comprising:
detecting a color temperature of an ambient light of the video display apparatus;
determining whether a current time is in one of a first time slot from a sunrise time to a sunset time and a second time slot from the sunset time to the sunrise time based on sunrise/sunset time information to obtain time slot information of the current time; and
controlling video processing of a video signal based on the color temperature and the time slot information.
